# EUROPEAN PATENT SPECIFICATION

(11) **EP 1 451 458 B1**
(45) Date of publication and mention of the grant of the patent: **19.07.2006**
(21) Application number: 01972856.7
(22) Date of filing: 01.10.2001
(51) Int. Cl.: F02C 7/04, F01D 25/24

(54) **ARRANGEMENT AT GAS TURBINE**
ANORNDUNG BEI GASTURBINE
ARRANGEMENT AU NIVEAU D'UNE TURBINE A GAZ

(43) Date of publication of application: 01.09.2004
(73) Proprietor: CAMFIL AB, 619 33 Trosa (SE)
(72) Inventor: SANDBERG, Peter, S-516 30 Dalsjöfors (SE); EKBERG, Tord, S-507 34 Brämhult (SE); JOHANSSON, Peter, S-523 02 Timmele (SE)
(74) Representative: Berglund, Erik Wilhelm
(86) International application number: PCT/SE2001/002118
(87) International publication number: WO 2003/029629

(56) References cited:
- US-A- 4 002 023
- US-A- 5 355 074
- US-A- 5 649 418
- US-A- 6 134 878
- US-B1- 6 250 068

## Description

In order to provide electric power gas turbine driven generators are used in an increasing number. A major advantage is that they can be installed practically everywhere to provide local supply of electricity supporting the local power supply distribution. This type of installation can also be used to drive pumps or compressors. Typically such an installation includes housings for the turbine and the generator respectively. To the turbine housing an air inlet with filters is coupled. A venting for the turbine/generator housing is also present. See e.g. prior art document US-A-4002023. Corresponding outlets are also arranged. At part loads air that has passed the low pressure inlet compressor is to some extent bled off via a compressor bleed system and released into the ambient atmosphere. The reduction in combustion air is synchronized with a reduction in fuel feed and result in a power reduction. The compressor bleed system is a heavy and large structure including ductwork, acoustics and load bearing structure.

Since these gas turbine driven generators in most cases are placed close to the users the installations are decentralized and in large numbers. This in reality means that installation personnel often are unskilled and unfamiliar with the mounting of this type of systems with inlet housing and the different air ducts. For the for proper functioning and security for the machinery as well as for personnel it is however very important that all these devices, that are mounted on the turbine housing are correctly placed and fastened. Since this is a rather time consuming work taking in a normal case approximately three to four weeks and installation sites are geographically spread it is only to be expected that local inexperienced labor is used.

A particular problem is that the filter housing, placed to match the gas turbine inlet, is offset in relation to the gas turbine housing. The filter housing is therefor supported by a separate support structure. This results in site adjustments to avoid misalignment. If the foundation is not correct the filter housing will become misaligned laterally or in height in relation to the turbine housing. This will require much site adjustments and may also lead to leaks or sealing problems between components. Leakage in the inlet system will cause rapid degradation of turbine performance.

The object of the invention is to overcome the above problems and facilitate the assembly and reduce the risk of mistakes even when unqualified persons assembly the housing, inlet filters etc.

The above object is overcome by integrating the air filter housing and a part of or the entire compressor bleed system into one unit. The center of gravity for the integrated unit will be moved sufficiently in over the turbine housing to provide a stable support for this without the above mentioned frame and one major source of misalignment is eliminated. Since the filter housing and the compressor bleed system is heavy a good, well sealed and immediate fit of the integrated filter housing and compressor bleed system on the turbine housing is obtained.

The housings are preferably provided with sealing and positioning means as well as means for anchoring the housings together.

In a preferable further development the air inlet for venting the turbine housing may also be integrated with the filter housing and compressor bleed system. It is particularly advantageous if the venting passage surrounds the compressor bleed system. The venting passage may in some cases even surround the silencer in the lower intermediate part. In this way weight and sound reductions are obtained

An advantageous further development of the invention is achieved by separating in particular the compressor bleed system into two parts. Also the venting, if present, is divided into two parts and on the inlet side also the silencer and the inlet filters are separated from each other. However this separating of the ducts allow a lateral integration of the resulting parts into an upper unit and a lower unit. A lower unit closest to the turbine housing containing a silencer, and a part of the duct for the compressor bleed air from the turbine; and a second top part being constituted by a filter housing and the upper part of the compressor bleed air duct. In this way also a considerable displacement of the center of gravity is caused by the heavy duct for the compressor bleed air from the turbine and no separate frame is needed for the support of the filter housing. At the same time will the lateral integration will enable all sections of the upper unit as well as the lower or intermediate part to be assembled at the factory prior to delivery. This means that there is only three parts that have to assembled on site and since these parts are to be assembled in series with each other, the possibilities to make mistakes on site are greatly reduced. The elimination of the separate support structure for the filter housing also reduce the risk for people and equipment.

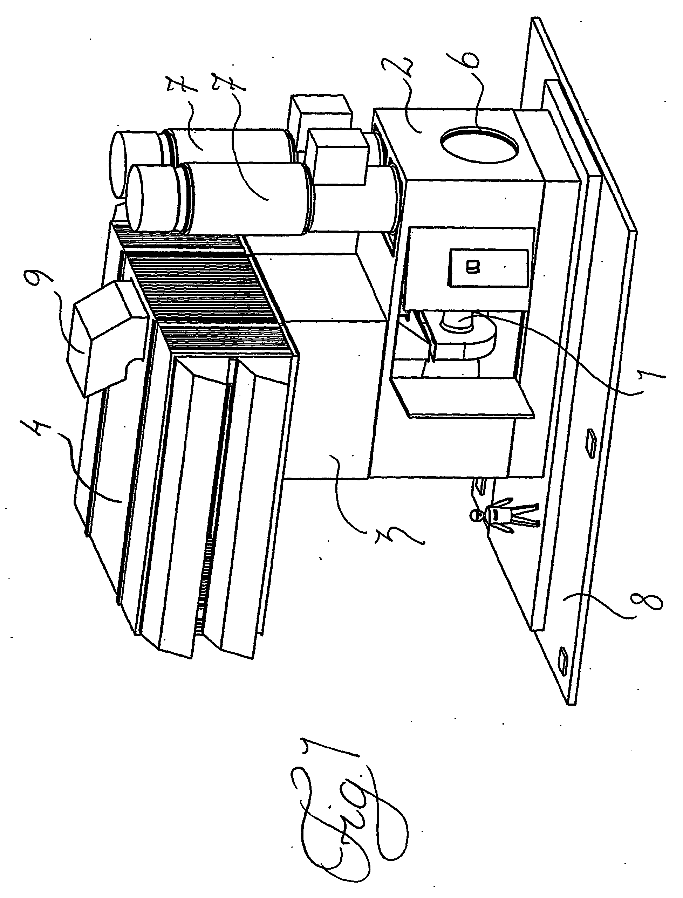

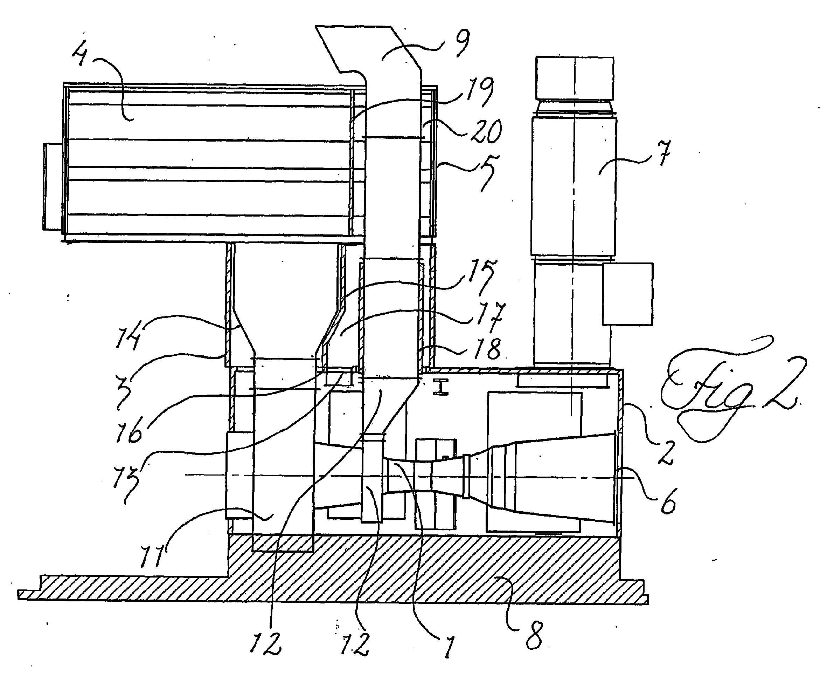

Further features and advantages of the invention are apparent from the subclaims and the following description of an embodiment of the invention shown in the accompanying drawings. In the drawings fig 1 shows in perspective an arrangement in accordance with the invention and fig 2 shows a cross section of this arrangement.

The installation shown in the drawings include a gas turbine 1 placed inside a housing 2. On top of the turbine housing an intermediate housing 3 rests and on top of this a filter housing 4 is arranged, through which the inlet air to the turbine is taken. 5 is an inlet for fresh vent air to the turbine housing. A gas outlet 6 is arranged in the end of the turbine housing and coupled to a vertically not shown funnel. On the roof of the turbine housing two outlet tubes 7 from the inner of the turbine housing evacuates the air inside the turbine housing. The tubes are provided with fans to blow out the air, however these tubes are normally only operated one at a time. The gas turbine housing rests on a concrete base plate 8. On top of the filter housing can be seen a compressor bleed air outlet 9 for air that is bled away from the compressor of the turbine when a power reduction is wanted. In the inlet end of the turbine housing 2 a generator, not shown, is coupled to the turbine.

The gas turbine 1 has an inlet air distributor 11 enclosing the inlet end of the turbine and extending up towards the roof of the gas turbine housing 2.

The gas turbine also has a bleed air outlet duct 12 that extends around the turbine and up to the roof of the gas turbine housing. This duct 12 is provided with a slide valve for the power control of the turbine 2.

The roof of the turbine housing is furthermore provided with an inlet vent opening 13 for feeding fresh air to the inside of the gas turbine housing.

On the roof of the gas turbine housing the intermediate housing 3 is arranged that in its bottom is provided with openings corresponding to the above mentioned openings in the roof of the gas turbine housing. In the intermediate housing a silencer 14 for the inlet air to the turbine extends from the top of the intermediate housing to its bottom, where its location corresponds to that of the inlet air distributor 11 in the turbine housing 2.

Close to the silencer a partition 15 separates a remaining compartment 17 in the intermediate housing that has a short tube 16 in the bottom extending into the opening 13 in the roof of the turbine housing. In the roof part of the intermediate housing the compartment 17 for the inlet vent air is open over a larger part of its roof area. In some installations the partition may be left out so that the vent air also surrounds the silencer.

Through the compartment 17 for the incoming vent air a vertical tube 18 extends constituting a part of the compressor bleed ducting. The tube 18 extends a short distance down through the roof of the turbine housing for coupling together with the bleed outlet duct 12 via a slide valve (not shown). The tube 18 extends upwards to a short distance below the top of the intermediate part 3.

On top of the intermediate housing the filter housing 4 is arranged provided with an opening in the bottom corresponding to the inlet of the silencer 14. The filter housing 4 contains numerous inlet filters.

The outlet 9 for the air that is bled off from the compressor to reduce the generated power is fastened in the roof of the filter housing and is provided with an extension that reach to the tube 18 in the intermediate housing giving a continuous passage from the turbine to the outlet on top of the filter housing.

A partition 19 screens off a compartment 20 from the inner of the filter part of the filter housing 4 and a filter provided opening 5 is arranged in the end of the filter housing to permit ambient air to be sucked in through the filter 5, further through the compartments 20 and 17 into the turbine housing, through this and out through either of the fan provided outlet tubes.

By the enclosing of the tubes for the bleed off air from the turbine through the compartments transporting the vent air a considerable sound attenuation is achieved at the same time as an increased structural strength, which in turn can permit weight reductions, in particular for the ducting of the compressor bleed off air.

The housings may be provided with couplings means for fast initial connecting and additional couplings to secure the parts together later.

The offset of the intermediate and filter housings caused by the location of the connections on the turbine itself may still cause an uncentered load on the turbine housing but the filter housing can for mounting be set down on top of the intermediate housing without any additional support since the integration of in particular the heavy outlet 9 balances the filter housing. If necessary in extreme cases two pillars or struts may be inserted and adjusted to the correct height below the outer corners of the filter housing after the mounting of this. Alternatively pull rods may be arranged between the top edges of turbine housing and filter housing.

With the invention the number of separate parts delivered to the installation site is minimized. From over 50 parts in the old design it is now possible to deliver three-four preassembled sections. This reduces site installation time as well as risks of non-matching parts on site. Although some additional work is made in the factory this can be made very efficient compared to the huge amount of site work with the old design. Furthermore it results in less parts and volume to freight as well as less risks of transport and handling damages.

Site work is simplified in terms of complexity and logistics. The typical assembly time on site for one turbine package can be reduced from three to four weeks down to one week. The invention also results in considerable cost saving and lead-time reduction.

Additionally the invention will also result in a neater outward appearance and greater possibilities to reduce wind resistance. The improved appearance will also mean less nooks and corners where sand, leafs or snow can accumulate.

In some cases the foundation for the turbine housing may be too weak to support also the weight of the filter housing. For such cases it may still be appropriate to use a separate frame to support the filter housing. Also in this case it is still of great advantage to use the invented integration of filter housing and compressor bleed air duct, since this reduce the weight that has to be carried by the turbine housing with a part of the compressor bleed air ducting. This means that the intermediate part may still be supported directly on the turbine housing and a resilient sealing means may be inserted between the filter housing and the intermediate housing. Since the pressures are comparatively low such a seal may have a great degree of compression making it easy for it to compensate for different distances and in fact also differing inclinations.

The above mentioned sealing means may alternatively be inserted below the intermediate housing that may be suspended in the filter housing or integrated with this.

## Claims

1. Arrangement at a gas turbine installation, **characterized in that** an inlet filter housing and a compressor bleed ducting are integrated to one unit that in its bottom or floor part is provided with corresponding openings or connections facing corresponding openings in the roof of the gas turbine housing.

2. Arrangement according to claim 1, **characterized in that** also a venting conduit for the turbine housing is arranged in the integrated unit of filter housing and compressor bleed ducting.

3. Arrangement according to claim 2, **characterized in that** the venting conduit at least partly surrounds the compressor bleed ducting.

4. Arrangement according to any of the preceding claims, **characterized in that** the integrated filter housing and compressor bleed ducting is subdivided into an upper (filter) housing and a lower (intermediate) housing and that for the inlet air to the turbine a silencer is arranged in the intermediate housing.

5. Arrangement according to any of the claims 2-4, **characterized in that** a partition separates a space for the vent inlet air.

6. Arrangement according to any of the claims 2 - 5, **characterized in that** the vent air intake is in the end of the filter housing that contains the bleed outlet.

7. Arrangement according to any of the preceding claims, **characterized in that** the filter housing is supported on a separate framework and connected to the intermediate housing or turbine housing via a resilient or adaptable seal with great thickness.

8. Arrangement according to claim 7, **characterized in that** the intermediate housing is suspended in the filter housing.

## Patentansprüche

1. Anordnung bei einer Gasturbinenanlage, **dadurch gekennzeichnet, dass** ein Einlassfiltergehäuse und eine Kompressorausströmleitung zu einer Einheit zusammen gefasst sind, welche an ihrem unteren oder oberen Teil mit zugeordneten Öffnungen oder Verbindungen versehen ist, welche zugeordneten Öffnungen im Dachteil des Gasturbinengehäuses zugewandt sind.

2. Anordnung nach Anspruch 1, **dadurch gekennzeichnet, dass** auch eine Belüftungsleitung für das Turbinengehäuse in der Baueinheit aus Filtergehäuse und Kompressorausströmleitung angeordnet ist.

3. Anordnung nach Anspruch 2, **dadurch gekennzeichnet, dass** die Belüftungsleitung wenigstens teilweise die Kompressorausströmleitung umgibt.

4. Anordnung nach einem der vorangehenden Ansprüche, **dadurch gekennzeichnet, dass** die Baueinheit aus Filtergehäuse und Kompressorausströmleitung in ein oberes (Filter-)Gehäuse und ein unteres (Zwischen-)Gehäuse unterteilt ist, und dass für die Einlassluft zur Turbine ein Schalldämpfer in dem Zwischengehäuse angeordnet ist.

5. Anordnung nach einem der Ansprüche 2 bis 4, **dadurch gekennzeichnet, dass** eine Unterteilung einen Raum für die Belüftungseinlassluft abteilt.

6. Anordnung nach einem der Ansprüche 2 bis 5, **dadurch gekennzeichnet, dass** der Belüftungsluftauslaß am Ende des Filtergehäuses vorgesehen ist, welches den Ausströmauslass enthält

7. Anordnung nach einem der vorangehenden Ansprüche, **dadurch gekennzeichnet, dass** das Filtergehäuse auf einem gesonderten Gestell abgestützt und mit dem Zwischengehäuse oder dem Turbinengehäuse über eine federnd nachgiebige oder anpassbare Dichtung mit großer Dicke verbunden ist.

8. Anordnung nach Anspruch 7, **dadurch gekennzeichnet, dass** das Zwischengehäuse im Filtergehäuse hängend angeordnet ist.

## Revendications

1. Agencement au niveau d'une installation de turbine à gaz, **caractérisé en ce qu'**un boîtier de filtre d'entrée et un conduit de soutirage de compresseur sont intégrés à une unité qui, dans sa partie inférieure ou de plancher, est munie d'ouvertures ou de connexions correspondantes placées face à des ouvertures correspondantes, ménagées dans le toit du carter de turbine à gaz.

2. Agencement selon la revendication 1, **caractérisé en ce qu'**également un conduit d'aération pour le carter de turbine est agencé dans l'unité intégrée du carter de filtre et du conduit de soutirage de compresseur.

3. Agencement selon la revendication 2, **caractérisé en ce que** le conduit d'aération entoure au moins partiellement le conduit de soutirage de compresseur.

4. Agencement selon l'une quelconque des revendications précédentes, **caractérisé en ce que** le carter de filtre intégré et le conduit de soutirage de compresseur sont subdivisés en un carter (de filtre) supérieur et un carter (intermédiaire) inférieur, et **en ce qu'**un silencieux est agencé dans le carter intermédiaire pour l'air d'entrée à la turbine.

5. Agencement selon l'une quelconque des revendications 2 à 4, **caractérisé en ce qu'**une cloison de subdivision sépare un espace pour l'air d'entrée d'évent.

6. Agencement selon l'une quelconque des revendications 2 à 5, **caractérisé en ce que** l'admission d'air d'évent est placée dans l'extrémité du carter de filtre contenant la sortie de soutirage.

7. Agencement selon l'une quelconque des revendications précédentes, **caractérisé en ce que** le carter de filtre est supporté sur un châssis séparé et relié au carter intermédiaire ou à un carter de turbine via un joint d'étanchéité élastique ou adaptable, ayant une grande épaisseur.

8. Agencement selon la revendication 7, **caractérisé en ce que** le carter intermédiaire est suspendu dans le carter de filtre.
